# FASCICULE DE BREVET EUROPEEN

(11) **EP 3 174 746 B1**
(45) Date de publication et mention de la délivrance du brevet: **19.09.2018**
(21) Numéro de dépôt: 15756969.0
(22) Date de dépôt: 27.07.2015
(51) Int. Cl.: B60J 1/00, F16B 5/06, F16B 21/02

(54) **VITRAGE COMPRENANT UN PION ET PROCEDE DE FABRICATION DU VITRAGE**
GLASSCHEIBE MIT EINEM ZAPFEN UND VERFAHREN ZUR HERSTELLUNG DER GLASSCHEIBE
GLASS PANEL COMPRISING A PIN AND METHOD FOR MANUFACTURING THE GLASS PANEL

(30) Priorité: 30.07.2014 FR 1457379
(43) Date de publication de la demande: 07.06.2017
(73) Titulaire: Saint-Gobain Glass France, 92400 Courbevoie (FR)
(72) Inventeur: GONNET, Romain, F-60610 Lacroix Saint Ouen (FR)
(74) Mandataire: Saint-Gobain Recherche
(86) Numéro de dépôt international: PCT/FR2015/052068
(87) Numéro de publication internationale: WO 2016/016564

(56) Documents cités:
- EP-A2- 0 242 223
- DE-A1-102005 036 908
- FR-A1- 2 980 444

## Description

La présente invention concerne un vitrage comprenant un élément vitré, ce vitrage étant destiné à être positionné ou fixé sur une structure, notamment un élément de carrosserie automobile, au moyen d'au moins un pion. Elle concerne également un procédé de fabrication d'un tel vitrage.

Il est connu en effet pour positionner ou assurer la fixation d'un vitrage sur une structure, notamment une carrosserie d'automobile, de faire appel à au moins un pion et de préférence plusieurs pions, ou insert(s), que l'on solidarise préalablement au vitrage en le(s) noyant en partie dans un enrobage en matière plastique, au cours d'une opération dite d'encapsulation ou en les collant à l'aide d'une couche de matériau adhésif.

La présente invention concerne précisément un vitrage comprenant un élément vitré et au moins un pion pour le positionnement ou la fixation dudit vitrage sur un élément de structure, notamment un élément de carrosserie d'un véhicule, ledit pion comportant
- d'une part une base qui est collée à l'aide d'une couche de matériau adhésif sur une surface dudit élément vitré ou qui présente une partie surmoulée située dans une portion de joint profilé et une partie extérieure située en dehors de ladite portion de joint profilé et
- d'autre part un élément saillant qui présente une tête de guidage ou de fixation et un pied, ledit élément saillant comportant des moyens pour le clippage avec ladite base par rapport à un axe central A vertical. Un tel pion est décrit dans le document FR 2 980 444 A1.

Dans le cadre de l'invention, il faut comprendre qu'un pion destiné à permettre la fixation peut aussi, avant la fixation, être utilisé pour le positionnement.

Dans le cadre de l'invention, il faut comprendre par ailleurs que le surmoulage peut présenter une étape préalable de collage et que le collage peut présenter une étape préalable de surmoulage.

Les pions permettant de maintenir et de référencer le vitrage lors de son montage sur la carrosserie permet éventuellement de compenser les défauts de galbe de l'élément vitré.

Il est difficile de concevoir un clippage correct de l'élément saillant avec la base en raison de l'environnement : il est important que le vitrage soit au plus près de la carrosserie mais le clippage entre l'élément saillant et la base du pion est nécessairement réalisé entre la surface de l'élément vitré et la carrosserie adjacente ; l'espace disponible pour le clippage est donc réduit et doit être le plus petit possible.

Ce clippage doit être efficace et fiable.

La présente invention a pour but de remédier à ces inconvénients en proposant un vitrage avec un pion dont les moyens de clippage se guident mutuellement afin de limiter les efforts inadéquats qui risqueraient sinon de provoquer la rupture de ces moyens de clippage.

La présente invention entend présenter une solution aux problèmes de l'art antérieur.

La présente invention consiste ainsi en un vitrage selon la revendication 1. Ce vitrage comprend un élément vitré et au moins un pion pour le positionnement ou la fixation dudit vitrage sur un élément de structure, notamment un élément de carrosserie d'un véhicule, ledit pion comportant d'une part une base qui est collée à l'aide d'une couche de matériau adhésif sur une surface dudit élément vitré ou qui présente une partie surmoulée située dans une portion de joint profilé et une partie extérieure située en dehors de ladite portion de joint profilé et d'autre part un élément saillant qui présente une tête de guidage ou de fixation et un pied, ledit élément saillant comportant des moyens pour le clippage avec ladite base par rapport à un axe central A vertical.

Ce vitrage est remarquable en ce que ladite base comporte
- une embase présentant une face inférieure orientée vers ladite surface de l'élément vitré et une face supérieure située à l'opposé de ladite surface de l'élément vitré,
- un corps orienté selon ledit axe A à partir de ladite surface supérieure, et
- une semelle située au-dessus de ladite face supérieure de telle sorte qu'une rainure est située entre ladite embase et ladite semelle,
en ce que ledit pied comporte au moins une aile qui s'étend à partir dudit axe A et est pliée afin que son extrémité libre soit orientée vers ledit axe A,
en ce que ladite base présente en outre soit un creux central, s'étendant vers le bas ne débouchant pas en face inférieure de ladite base, soit une bosse centrale s'étendant vers le haut et ledit pied comporte respectivement soit une bosse centrale, s'étendant vers le bas, de forme cylindrique ou conique, soit un creux central, s'étendant vers le haut,
et en ce que ladite bosse pénètre dans ledit creux et ladite aile pénètre dans ladite rainure.

Pour la fiabilité mécanique du clippage, il est important que ce soit la base qui comporte la rainure et l'élément saillant qui comporte l'aile (ou les ailes) qui pénètre (nt) dans cette rainure.

Ainsi, il est possible de réaliser un clippage de l'élément saillant sur la base qui est fiable, robuste et compact.

La base et l'élément saillant sont deux pièces distinctes du pion.

Le corps de la base est de préférence cylindrique. La rainure est, de préférence, située entre ladite embase et ladite semelle, tout autour du corps de la base ; cette rainure est ainsi, de préférence, annulaire.

De préférence, le creux central est formé dans la base et la bosse est formée sur l'élément saillant car c'est la solution qui offre le meilleur guidage entre les deux pièces, tout en permettant de réaliser le clippage le plus compact possible.

Dans ce cas, de préférence, le creux central s'étend vers le bas sans déboucher en face inférieure de ladite base, afin de conserver la plus grande surface possible pour la coopération entre la face inférieure de ladite base et la surface de l'élément vitré adjacente.

Ledit pied comporte, de préférence, deux ailes qui s'étendent toutes les deux à partir du pied et sont pliées chacune afin que leurs extrémités libres soient en vis-à-vis, orientées vers ledit axe A, lesdites deux ailes pénétrant dans ladite rainure de ladite base.

Dans ce cas, lesdites deux ailes s'étendent à partir du pied, de préférence, sur un rayon r de 90° afin d'être les plus large possible et permettre ainsi la retenue la plus efficace possible.

Ladite aile au moins, ou chaque aile, comporte, de préférence, un ergot ou une fente et ledit corps comporte respectivement une fente ou un ergot : l'ergot, ou chaque ergot, est destiné à pénétrer dans la fente afin de permettre bloquer la position de l'aile par rapport à la semelle, c'est-à-dire la position de l'élément saillant par rapport à la base pour empêcher la rotation de l'élément saillant par rapport à la base selon l'axe A.

De préférence, chaque aile comporte un ergot ou une fente et lesdits ergots, ou lesdites fentes, sont situées en vis-à-vis par rapport à l'axe A.

Dans une variante de réalisation, ladite aile, ou chaque aile, s'étend horizontalement à partir dudit axe A et est pliée deux fois à angle droit afin que son extrémité libre soit orientée vers ledit axe A.

Il serait possible que ladite aile, ou chaque aile, s'étend avec un angle non droit par rapport à l'axe A à partir dudit axe A.

Pour un meilleur maintien, ladite aile présente, de préférence, une épaisseur sensiblement égale à la hauteur de ladite rainure.

La présente invention se rapporte par ailleurs à un procédé de fabrication d'un vitrage suivant l'invention, selon lequel pour clipper ensemble ledit élément saillant et ladite base, d'une part ladite bosse pénètre dans ledit creux et d'autre part ladite aile pénètre dans ladite rainure par rotation dudit élément saillant autour de l'axe central A vertical.

Avantageusement, grâce à l'invention, le clippage de l'élément saillant du pion sur la base du pion est fiable et robuste : le risque de rupture des parties les plus fines de l'élément saillant (la ou les ailes) est limité en raison du fait que ces parties sont guidées par les parois de la rainure de la base.

On décrira ci-après, à titre d'exemple non limitatif, plusieurs formes d'exécution de la présente invention, en référence au dessin annexé sur lequel :
- la figure 1 est une vue de face d'un premier mode de réalisation d'un pion suivant l'invention,
- la figure 2 est une vue en coupe axiale selon BB de la figure 1,
- la figure 3 est une vue de côté du premier mode de réalisation de la figure 1,
- la figure 4 est une vue en coupe selon CC de la figure 3,
- la figure 5 est une vue éclatée des deux pièces constitutives du pion selon le premier mode de réalisation de la figure 1,
- les figures 6 à 9 illustre le clippage de l'élément saillant sur la base pour le premier mode de réalisation de la figure 1,
- la figure 10 est une vue en coupe axiale d'un second mode de réalisation du pion selon l'invention.

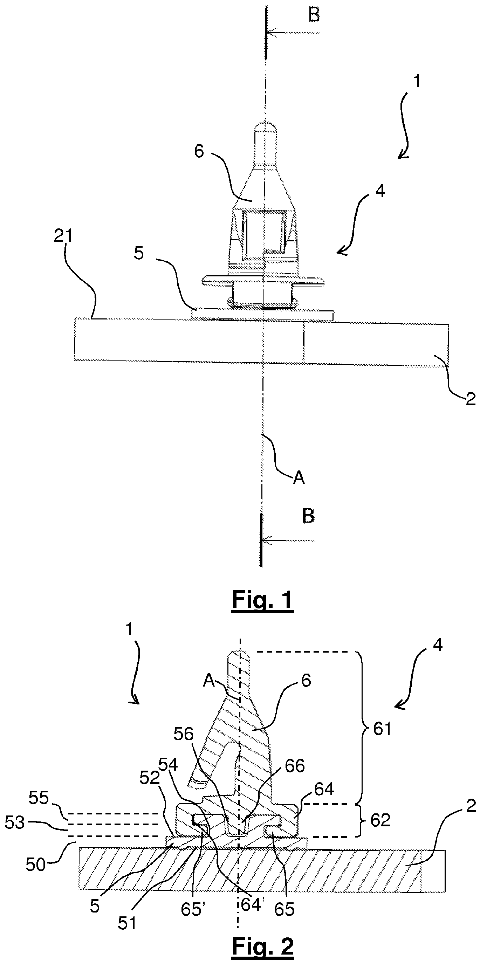

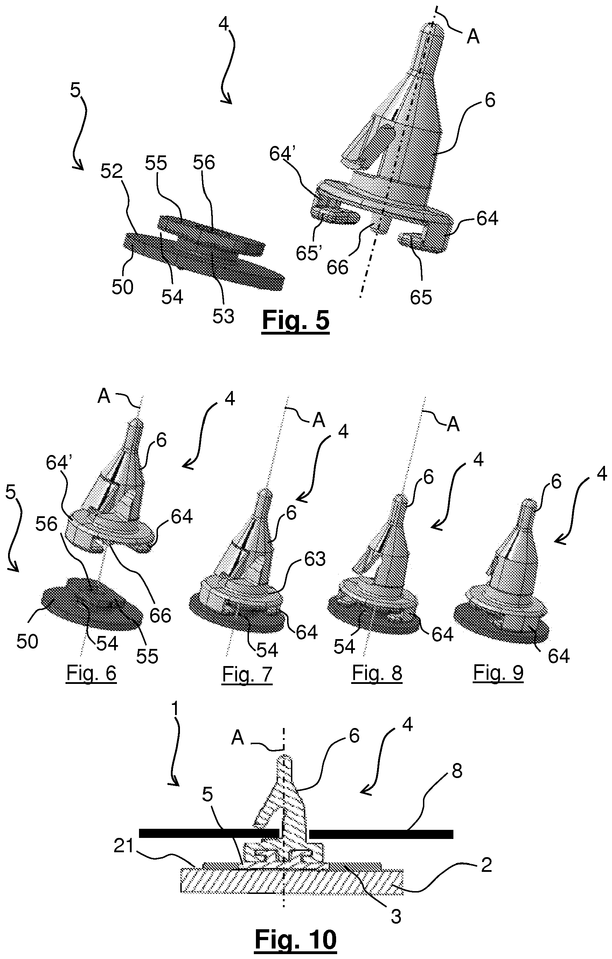

A l'intérieur de chaque figure, ainsi que d'une part pour les figures 1 à 4 et d'autre part pour les figures 6 à 9, les proportions entre les différents éléments sont respectées et les éléments en arrière plan ne sont en général pas représentés, afin de faciliter leur lecture.

On a représenté sur les figures 1 à 9 un pion 4 suivant l'invention dont une partie est destinée à être collé sur un élément vitré 2 à l'aide d'une couche de matériau adhésif (non illustrée) et une autre partie est ensuite clippée sur cette première partie. Ce pion 4 est ainsi constitué de deux pièces distinctes :
- d'une part une base 5 qui est collée sur une surface dudit élément vitré, et
- d'autre part un élément saillant 6.

Cet élément saillant 6 présente une tête de guidage et/ou de fixation 61, destinée à coopérer avec la carrosserie (non illustrée sur les figures 1 à 9) et un pied 62 qui comporte des moyens pour le clippage avec ladite base 5 par rapport à un axe central A vertical.

Selon l'invention, la base 5 comporte
- une embase 50 qui présente
   - une face inférieure 51 orientée vers ladite surface de l'élément vitré 2, en l'occurrence ici vers une face intérieure 21 de l'élément vitré 2, et
   - une face supérieure 52 située à l'opposé de la surface 21 de l'élément vitré,
- un corps 53, cylindrique, qui est orienté selon ledit axe A à partir de ladite surface supérieure 52, et
- une semelle 55, rectangulaire, qui est située au-dessus de la face supérieure 52 de telle sorte qu'une rainure 54 est située entre ladite embase 50 et ladite semelle 55.

Selon l'invention, l'élément saillant 6 est tel que le pied 62 comporte au moins une aile 64, 64' qui s'étend à partir dudit axe A et est pliée afin que son extrémité libre 65, 65' soit orientée vers ledit axe A.

En outre, la base 5 présente un creux 56 central, s'étendant vers le bas (sans déboucher en face inférieure 51) et ledit pied 62 comporte une bosse 66 centrale, s'étendant vers le bas, de forme cylindrique ou conique.

Ainsi, la bosse 66 centrale pénètre dans ledit creux 56 central et ladite aile 64 pénètre dans ladite rainure 54.

Il est possible que ce soit le pied 62 qui présente un creux central, qui s'étend alors vers le haut et que ladite base 5 comporte une bosse centrale, qui s'étend alors vers le haut, de forme cylindrique ou conique afin que de la même manière la bosse centrale pénètre dans le creux central (les notions de « haut/bas », « supérieur/inférieur » et « vertical/horizontal » utilisées dans le présent document sont en référence à l'axe A orienté verticalement, comme illustré sur les figures 1 à 3 et 10).

La rainure 54 est située entre ladite embase 50 et ladite semelle 55 tout autour du corps 53.

Comme visible sur les figures, le pied comporte deux ailes 64, 64' qui s'étendent toutes les deux à partir du pied 62 et sont pliées chacune deux fois à angle droit afin que leurs extrémités libres 65, 65' soient en vis-à-vis, orientées vers ledit axe A. Ces deux ailes 64, 64' pénètrent dans ladite rainure 54 de la base 5.

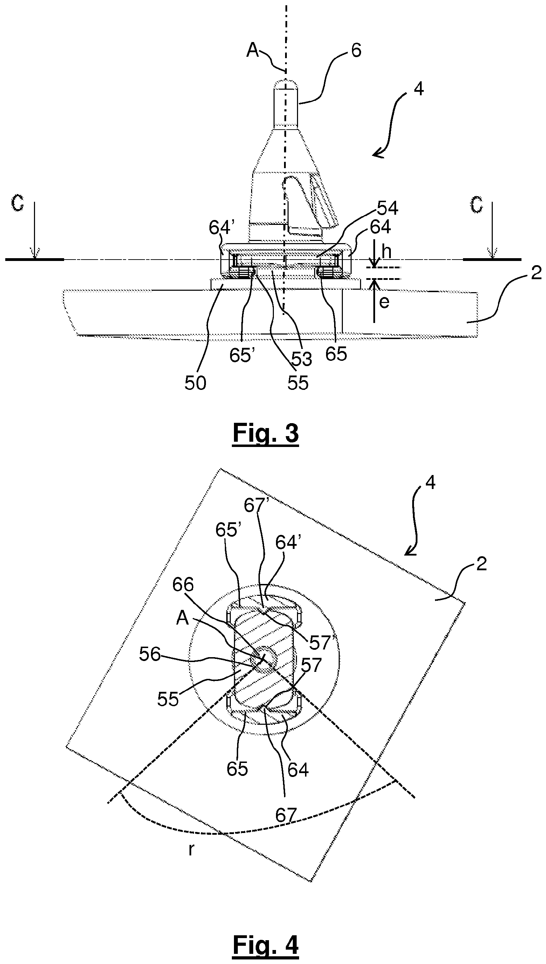

Comme visible en figure 3, les ailes 64, 64' présentent toutes les deux une épaisseur e sensiblement égale à la hauteur h de ladite rainure 54, c'est-à-dire la hauteur du corps 53.

La figure 4 montre que les deux ailes 64, 64' s'étendent à partir du pied 62 sur un rayon r de 90° afin d'obtenir la plus grande surface de contact entre les ailes et la rainure.

Cette figure montre par ailleurs que les ailes 64, 64' comportent chacune un ergot 67, 67' et le corps 53 comporte respectivement deux fentes 57, 57' qui accueillent ces ergots.

Les ergots sont situées en vis-à-vis l'un de l'autre par rapport à l'axe A, c'est-à-dire à 180 °. Les ergots ;67, 67' s'étendent de préférence sur toute l'épaisseur des ailes 64, 64' et les fentes 57, 57' s'étendent de préférence sur toute la hauteur de ladite rainure 54, c'est-à-dire la hauteur du corps 53.

Les ailes 64, 64' s'étendent horizontalement à partir de l'axe A et sont pliée chacune deux fois à angle droit afin que leurs extrémités libres 65, 65' soit orientées vers ledit axe A.

Les figures 6 à 9 illustrent le clippage de l'élément saillant 6 des figures précédents avec la base 5 des figures précédentes.

Selon l'invention, pour opérer ce clippage, d'une part la bosse 66 doit pénétrer dans le creux 56 et d'autre part les ailes 64 doivent pénétrer dans la rainure 54 par rotation dudit élément saillant 6 autour de l'axe central A vertical ; ainsi,
- en figure 6, l'élément saillant 6 est présenté près de la base 5 et est approché par translation selon la direction de l'axe A (illustré incliné sur les figures 6 à 9 pour une meilleure visibilité) ; les deux ailes 64 sont présentées en vis-à-vis de la partie la plus courte de la rainure 54 (les deux parties les moins profondes de la rainure) ;
- en figure 7, les deux ailes 64 sont introduites dans les deux partie les moins profondes de la rainure 54 ;
- en figure 8, l'élément saillant 6 a été tourné d'un huitième de tour par rapport à la figure précédente, autour de l'axe A ; les deux ailes 64 sont à moitié dans les deux parties les plus profondes de la rainure 54 ;
- en figure 9, l'élément saillant 6 a encore été tourné d'un huitième de tour par rapport à la figure précédente autour de l'axe A et il est maintenant clippé sur la base 5 : les deux ailes 64 sont complètement dans les deux parties les plus profondes de la rainure 54 ; en outre, pour bloquer la position de l'élément saillant 6 vis-à-vis de la base 5, les deux ergots (non visibles sur cette figure) sont dans les deux fentes correspondantes.

Sur la figure 10 est illustré un second mode de réalisation de l'invention selon lequel :
- la base 5 présente une partie surmoulée qui est située dans une portion de joint profilé 3 : l'embase 50 sauf sa face supérieure 52 et
- une partie extérieure de la base 5 est située en dehors de ladite portion de joint profilé 3 : la face supérieure 52, le corps 53, la semelle 55 et la rainure 54.

Le figure 10 illustre par ailleurs un exemple de coopération entre l'élément saillant 6 et la carrosserie 8.

Pour assurer l'encapsulation partielle du pion 4 sur l'élément vitré 2 telle que représentée sur la figure 10, il peut être procédé successivement ainsi que décrit ci-après :
- l'élément vitré 2 est disposé dans une partie inférieure d'un moule,
- le pion (ou les différents pions) 4 est (ou sont) disposé(s chacun) dans une cavité prévue dans une partie supérieure du moule.
- le moule est fermé ; au cours de cette opération un élément d'étanchéité, comme par exemple un joint, est appliqué contre la face supérieure 52 de l'embase 50 pour assurer une bonne étanchéité et empêcher la présence de matière d'injection sur cette face supérieure,
- la matière plastique est injectée dans la cavité de moulage afin de former la portion de joint profilé 3.

## Revendications

1. Vitrage (1) comprenant un élément vitré (2) et au moins un pion (4) pour le positionnement ou la fixation dudit vitrage (1) sur un élément de structure, notamment un élément de carrosserie (8) d'un véhicule, ledit pion (4) comportant d'une part une base (5) qui est collée à l'aide d'une couche de matériau adhésif sur une surface dudit élément vitré (2) ou qui présente une partie surmoulée située dans une portion de joint profilé (3) et une partie extérieure située en dehors de ladite portion de joint profilé (3) et d'autre part un élément saillant (6) qui présente une tête de guidage ou de fixation (61) et un pied (62), ledit élément saillant (6) comportant des moyens pour le clippage avec ladite base (5) par rapport à un axe central A vertical, ladite base (5) comportant
- une embase (50) présentant une face inférieure (51) orientée vers ladite surface de l'élément vitré (2) et une face supérieure (52) située à l'opposé de ladite surface de l'élément vitré,
- un corps (53) orienté selon ledit axe A à partir de ladite surface supérieure (52), **caractérisé en ce que** ladite base (5) comporte
- une semelle (55) située au-dessus de ladite face supérieure (52) de telle sorte qu'une rainure (54) est située entre ladite embase (50) et ladite semelle (55),
**en ce que** ledit pied (62) comporte au moins une aile (64, 64') qui s'étend à partir dudit axe A et est pliée afin que son extrémité libre (65, 65') soit orientée vers ledit axe A,
**en ce que** ladite base (5) présente en outre soit un creux (56) central, s'étendant vers le bas, soit une bosse centrale s'étendant vers le haut et ledit pied (62) comporte respectivement soit une bosse (66) centrale, s'étendant vers le bas, de forme cylindrique ou conique, soit un creux central, s'étendant vers le haut,
**et en ce que** ladite bosse (66) pénètre dans ledit creux (56) et ladite aile (64) pénètre dans ladite rainure (54).

2. Vitrage suivant la revendication 1, **caractérisé en ce que** ledit pied (62) comporte deux ailes (64, 64') qui s'étendent toutes les deux à partir du pied (62) et sont pliées chacune afin que leurs extrémités libres (65, 65') soient en vis-à-vis, orientées vers ledit axe A, lesdites deux ailes (64, 64') pénétrant dans ladite rainure (54) de ladite base (5).

3. Vitrage suivant la revendication 2, **caractérisé en ce que** lesdites deux ailes (64, 64') s'étendent à partir du pied (62) sur un rayon r de 90 °.

4. Vitrage suivant l'une quelconque des revendications 1 à 3, **caractérisé en ce que** ladite aile (64, 64') comporte un ergot (67, 67') ou une fente **et en ce que** ledit corps (53) comporte respectivement une fente (57, 57') ou un ergot.

5. Vitrage suivant la revendication 4, **caractérisé en ce que** chaque aile (64, 64') comporte un ergot (67, 67') ou une fente **et en ce que** lesdits ergots ou lesdites fentes sont situées en vis-à-vis par rapport à l'axe A.

6. Vitrage suivant l'une quelconque des revendications 1 à 5, **caractérisé en ce que** ladite aile (64, 64'), ou chaque aile (64, 64'), s'étend horizontalement à partir dudit axe A et est pliée deux fois à angle droit afin que son extrémité libre (65, 65') soit orientée vers ledit axe A.

7. Vitrage suivant l'une quelconque des revendications 1 à 6, **caractérisé en ce que** ladite aile (64, 64') présente une épaisseur e sensiblement égale à la hauteur h de ladite rainure (54).

8. Procédé de fabrication d'un vitrage (1) suivant l'une quelconque des revendications 1 à 7, **caractérisé en ce que,** pour clipper ensemble ledit élément saillant (6) et ladite base (5), d'une part ladite bosse (66) pénètre dans ledit creux (56) et d'autre part ladite aile (64) pénètre dans ladite rainure (54) par rotation dudit élément saillant (6) autour de l'axe central A vertical.

## Patentansprüche

1. Glasscheibe (1), umfassend ein Glaselement (2) und mindestens einen Zapfen (4) zur Positionierung oder Fixierung der Glasscheibe (1) an einem Strukturelement, insbesondere einem Karosserieelement (8) eines Fahrzeugs, wobei der Zapfen (4) einerseits eine Basis (5) umfasst, die mithilfe einer Klebstoffschicht auf eine Fläche des Glaselements (2) geklebt ist oder die ein angeformtes Teil aufweist, das in einem Profildichtungsabschnitt (3) gelegen ist, und einen äußeren Teil, der außerhalb des Profildichtungsabschnitts (3) gelegen ist, und andererseits ein vorspringendes Element (6), das einen Führungs- oder Fixierungskopf (61) und einen Fuß (62) aufweist, wobei das vorspringende Element (6) Mittel zum Klipsen an die Basis (5) in Bezug auf eine vertikale Mittelachse A umfasst,
wobei die Basis (5) umfasst:
- eine Fußplatte (50), die eine Innenseite (51), die zur Fläche des Glaselements (2) hin ausgerichtet ist, und eine Oberseite (52), die auf der zur Oberfläche des Glaselements entgegengesetzten Seite gelegen ist, aufweist,
- einen Körper (53), der ausgehend von der Oberseite (52) entlang der Achse A ausgerichtet ist, **dadurch gekennzeichnet, dass** die Basis (5) umfasst:
- eine Sohle (55), die über der Oberseite (52) gelegen ist, so dass eine Nut (54) zwischen der Fußplatte (50) und der Sohle (55) gelegen ist,
**dass** der Fuß (62) mindestens einen Schenkel (64, 64') umfasst, der sich von der Achse A aus erstreckt und umgebogen ist, so dass sein freies Ende (65, 65') zu der Achse A hin ausgerichtet ist,
**dass** die Basis (5) ferner entweder einen zentralen Hohlraum (56), der sich nach unten hin erstreckt, oder eine zentrale Erhebung, die sich nach oben hin erstreckt, aufweist und der Fuß (62) jeweils entweder eine zentrale Erhebung (66) von zylindrischer oder konischer Form, die sich nach unten hin erstreckt, oder einen zentralen Hohlraum, der sich nach oben hin erstreckt, umfasst,
**und dass** die Erhebung (66) in den Hohlraum (56) eindringt und der Schenkel (64) in die Nut eindringt (54).

2. Glasscheibe nach Anspruch 1, **dadurch gekennzeichnet, dass** der Fuß (62) zwei Schenkel (64, 64') umfasst, die sich beide ausgehend vom Fuß (62) erstrecken und jeweils umgebogen sind, so dass ihre freien Enden (65, 65') einander gegenüber liegen, zur Achse A hin ausgerichtet, wobei die beiden Schenkel (64, 64') in die Nut (54) der Basis (5) eindringen.

3. Glasscheibe nach Anspruch 2, **dadurch gekennzeichnet, dass** die beiden Schenkel (64, 64') sich ausgehend vom Fuß (62) über einen Radius r von 90 ° erstrecken.

4. Glasscheibe nach einem der Ansprüche 1 bis 3, **dadurch gekennzeichnet, dass** der Schenkel (64, 64') eine Nase (67, 67') oder einen Schlitz umfasst **und dass** der Körper (53) jeweils einen Schlitz (57, 57') oder eine Nase umfasst.

5. Glasscheibe nach Anspruch 4, **dadurch gekennzeichnet, dass** jeder Schenkel (64, 64') eine Nase (67, 67') oder einen Schlitz umfasst **und dass** die Nasen oder die Schlitze in Bezug auf die Achse A einander gegenüber liegen.

6. Glasscheibe nach einem der Ansprüche 1 bis 5, **dadurch gekennzeichnet, dass** sich der Schenkel (64, 64') oder jeder Schenkel (64, 64') ausgehend von der Achse A horizontal erstreckt und zwei Mal im rechten Winkel umgebogen ist, so dass sein freies Ende (65, 65') zu der Achse A hin ausgerichtet ist.

7. Glasscheibe nach einem der Ansprüche 1 bis 6, **dadurch gekennzeichnet, dass** der Schenkel (64, 64') eine Dicke e aufweist, die im Wesentlichen gleich der Höhe h der Nut (54) ist.

8. Verfahren zur Herstellung einer Glasscheibe (1) nach einem der Ansprüche 1 bis 7, **dadurch gekennzeichnet, dass** zum Zusammenklipsen des vorspringenden Elements (6) und der Basis (5) durch Drehen des vorspringenden Elements (6) um die vertikale Mittelachse A einerseits die Erhebung (66) in den Hohlraum (56) eindringt und andererseits der Schenkel (64) in die Nut (54) eindringt.

## Claims

1. Glazing (1) comprising a glazed element (2) and at least one pin (4) for positioning or fixing said glazing (1) on a structural element, notably a vehicle bodywork element (8), said pin (4) comprising on the one hand a base (5) which is bonded using a layer of adhesive material to a surface of said glazed element (2) or which has an overmolded part situated in a profiled-seal portion (3), and an outer part situated outside of said profiled-seal portion (3) and on the other hand a projecting element (6) which has a guide or fixing head (61) and a foot (62), said projecting element (6) comprising means for clipping it to said base (5) with respect to a vertical central axis A, said base (5) comprising
- a baseplate (50) having a lower face (51) facing toward said surface of the glazed element (2) and an upper face (52) situated away from said surface of the glazed element,
- a body (53) oriented along said axis A from said upper surface (52),
**characterized in that** said base (5) comprises
- a flange plate (55) situated above said upper face (52) so that a slot (54) lies between said baseplate (50) and said flange plate (55),
**in that** said foot (62) comprises at least one flange (64, 64') extending from said axis A and bent so that its free end (65, 65') is oriented toward said axis A,
**in that** said base (5) also has either a central recess (56) extending downward, or a central boss extending upward, and said foot (62) comprises, respectively, either a central boss (66) extending downward, of cylindrical or conical shape, or a central recess extending upward,
**and in that** said boss (66) enters said recess (56) and said flange (64) enters said slot (54).

2. The glazing as claimed in claim 1, **characterized in that** said foot (62) comprises two flanges (64, 64') both of which extend from the foot (62) and are each bent so that their free ends (65, 65') face one another, oriented toward said axis A, said two flanges (64, 64') entering said slot (54) of said base (5).

3. The glazing as claimed in claim 2, **characterized in that** said two flanges (64, 64') extend from the foot (62) over a radius r of 90°.

4. The glazing as claimed in any one of claims 1 to 3, **characterized in that** said flange (64, 64') comprises a spur (67, 67') or a groove **and in that** said body (53) respectively comprises a groove (57, 57') or a spur.

5. The glazing as claimed in claim 4, **characterized in that** each flange (64, 64') comprises a spur (67, 67') or a groove **and in that** said spurs or said grooves are situated facing one another with respect to the axis A.

6. The glazing as claimed in any one of claims 1 to 5, **characterized in that** said flange (64, 64'), or each flange (64, 64'), extends horizontally from said axis A and is bent twice at right angles so that its free end (65, 65') is oriented toward said axis A.

7. The glazing as claimed in any one of claims 1 to 6, **characterized in that** said flange (64, 64') has a thickness e substantially equal to the height h of said slot (54).

8. A method of manufacturing glazing (1) as claimed in any one of claims 1 to 7, **characterized in that,** in order to clip together said projecting element (6) and said base (5), on the one hand said boss (66) enters said recess (56) and on the other hand said flange (64) enters said slot (54) by a rotation of said projecting element (6) about the vertical central axis A.
